# EUROPÄISCHE PATENTSCHRIFT

(11) **EP 1 404 960 B1**
(45) Veröffentlichungstag und Bekanntmachung des Hinweises auf die Patenterteilung: **19.01.2005**
(21) Anmeldenummer: 02754332.1
(22) Anmeldetag: 04.07.2002
(51) Int. Cl.: F02F 3/22, F16J 9/00, F16J 9/12

(54) **KÜHLBARER RINGTRÄGER FÜR INNENGEKÜHLTE KOLBENRINGE UND VERFAHREN ZU DEREN HERSTELLUNG**
COOLABLE ANNULAR SUPPORT FOR INTERNALLY COOLED PISTON RINGS AND METHOD FOR THE PRODUCTION THEREOF
SUPPORT ANNULAIRE REFROIDI POUR SEGMENTS DE PISTON A REFROIDISSEMENT INTERNE ET PROCEDE DE FABRICATION ASSOCIE

(30) Priorität: 06.07.2001 DE 10133724; 06.07.2001 DE 20111527 U
(43) Veröffentlichungstag der Anmeldung: 07.04.2004
(73) Patentinhaber: A.I.M.L. GMBH, 09514 Lengefeld (DE)
(72) Erfinder: MAYR-KOHN, Susanne, 70184 Stuttgart (DE)
(74) Vertreter: Krause, Wolfgang, Dr.-Ing., Dipl.-Ing.
(86) Internationale Anmeldenummer: PCT/DE2002/002498
(87) Internationale Veröffentlichungsnummer: WO 2003/004851

(56) Entgegenhaltungen:
- EP-A- 0 916 832
- DE-A- 19 838 529
- DE-A- 19 940 440
- US-A- 4 907 545
- US-A- 5 653 021
- PATENT ABSTRACTS OF JAPAN vol. 013, no. 225 (M-830), 25. Mai 1989 (1989-05-25) & JP 01 041648 A (HINO MOTORS LTD), 13. Februar 1989 (1989-02-13)

## Beschreibung

Die Erfindung betrifft kühlbare Ringträger für innengekühlte Kolbenringe bestehend aus einem als Kreisring ausgeführten Ringkörper und einem Kühlkanalblech, wobei das Kühlkanalblech ein Bestandteil des kühlkanals ist, und Verfahren zu deren Herstellung.

Die DE 40 40 611 C2 (Jet-Kolbenkühlung) und die DE 44 38 703 A1 (Leichtmetallkolben mit Kühlkanal für Verbrennungsmotoren) beschreiben eine Kolbenkühlung, bei der sich im Körper des Kolbens ein Hohlraum als Kühlraum befindet. Ein zusätzliches Element ist nicht notwendig, allerdings ist damit eine nicht einfache und ökonomische Realisierung eines Hohlraumes im Körper des Kolbens gegeben.
In der DE 41 31 275 C2 (Gebauter flüssigkeitsgekühlter Kolben) wird ein kühlbarer Kolben beschrieben, der aus mehreren Teilen besteht und montiert ist. Die Teile besitzen kühlkanalbildende Ausnehmungen und sind über Verbindungselemente, wie Schraubenverbindungen, miteinander verbunden. Die Herstellung der Kolben ist mit Montagearbeiten verbunden und durch die Anwendung kraftschlüssiger Verbindungen sind höhere Aufwendungen für die Dichtheit der Kühlkanäle notwendig. In DE 42 08 037 A1 (Mehrteiliger, gekühlter Kolben für Verbrennungsmotoren) wird der Kühlkanal aus einer durch eine zweigeteilte Tellerfeder abgeschlossenen Nut im Kolbenkörper gebildet. Die Dichtheit soll dabei über die Tellerfeder sichergestellt werden, wobei wiederum erhöhte konstruktive Aufwendungen notwendig sind.
In der DE 197 01 085 A1 (Verfahren und Anordnung zum Herstellen eines Ringträgerkolbens) wird ein Kühlkanal hinter einem Ringträger ausgebildet. Dazu ist ein Kern zur Bildung des Kühlkanals in die Gießform eingebracht, der nach außen durch das Einbringen des Ringträgers abgeschlossen ist. Damit sind wiederum erhöhte Aufwendungen für die Dichtheit des Kühlkanals notwendig.
Schließlich wird in der DE 199 33 036 A1 (Kühlkanalkolben für eine Verbrennungskraftmaschine) ein Kühlkanal aus einem Ringträgerbauteil mit zwei Nuten und dem Kolben selbst ausgebildet. Das Ringträgerbauteil muss wiederum dicht mit dem Kolben verbunden sein, damit kein Kühlmittel in den Verbrennungsraum gelangen kann.

Der in den Patentansprüchen 1 und 7 angegebenen Erfindung liegt das Problem zugrunde, dichte kühlbare Ringträger für innengekühlte Kolbenringe mit hoher Qualität ökonomisch günstig herzustellen.

Dieses Problem wird mit den in den Patentansprüchen 1 und 7 aufgeführten Merkmalen gelöst.

Die kuhlbaren Ringträger für innengekühlte Kolbenringe bestehend aus einem als Kreisring ausgeführten Ringkörper und einem Kühlkanalblech, wobei das Kühlkanalblech ein Bestandteil des Kühlkanals ist, und deren Verfahren zur Herstellung zeichnen sich insbesondere durch eine einfache Handhabbarkeit aus. Die Bestandteile in Form des Ringkörpers und des Kühlkanalbleches werden mittels Laserstrahlen wenigstens eines Lasers im cw-Betrieb miteinander verbunden. Das Kühlkanalblech ist U-förmig ausgebildet und weist mehrere Öffnungen vorteilhafterweise in wenigstens einem Schenkel auf Diese Oflinungen dienen in Verbindung mit rohrförmigen Körpern dem Ein- oder Austritt des Kühlmittels Ein weiterer Vorteil besteht durch die Öffnungen dadurch, dass durch unterschiedliche Temperaturen der Luft wahrend des Schweißens hervorgerufene Volumenschwankungen weitestgehend nicht zu Rissen oder Spalten der/des sich abkuhlenden Schweißnaht, Ringkörpers und/oder Kühlkanalbleches führen Die unterschiedlichen Luftdrücke können sich durch die Öffnungen mit der Umgebung ausgleichen.
Wenigstens eine Kante des Ringkörpers und das Kühlkanalblech bilden durch die Verbindung der Endenbereiche der Schenkel des Kühlkanalbleches mit dieser Kante des Ringkörpers einen Hohlraum für das Kühlmittel. Damit ist eine sehr einfache und ökonomische Realisierung des kühlbaren Ringträgers für innengekühlte Kolbenringe gegeben.
Die Verbindungen des Ringkörpers und des Kühlkanalbleches erfolgen über mehrere Schweißnähte, so dass eine dichte Verbindung zwischen diesen beiden Bestandteilen gewährleistet wird. Die Laserstrahlen werden dazu mit einem Versatz in Richtung der jeweils größten Materialmenge geführt, so dass unterschiedliche Wärmeleitfähigkeiten der Bestandteile bei der Ausbildung der jeweiligen Schweißnaht ausgeglichen werden. Weiterhin ist der Verfahrweg des kühlbaren Ringträgers oder der Laserstrahlen gegenüber dem kühlbaren Ringträger größer 360°. Damit wird die sich noch nicht vollständig ausbildende Schweißnaht während der Aufwärmphase nach dem Einschalten des Lasers nach dessen Positionierung bei gleichzeitiger Bewegung des kühlbaren Ringträgers oder der Laserstrahlen gegenüber dem kühlbaren Ringträger ausgeglichen. Eine ansonsten am Anfang notwendige größere Leistung wird vermieden, so dass gleichzeitig eine dadurch hervorgerufene Gefahr eines Durchbrennens mit daraus sich ergebenden Löchern weitestgehend vermieden wird.
Ein weiterer Vorteil besteht durch das Anbringen der rohrförmigen Körper. Diese stellen Leitungen des Kühlmittels dar. Ansonsten wird der Kühlkanal nach dem Gießen des Kolbens angebohrt. Das Bohren ist ein spanendes Verfahren, wobei auch Späne in den Kühlkanal gelangen können. Dadurch müssen die Kühlkanäle derartig hergestellter Kolben gespült werden. Das ist bei den erfindungsgemäßen Ringträgern nicht mehr notwendig, so dass sehr günstige ökonomische Bedingungen vorhanden sind. Ein weiterer Vorteil besteht darin, dass die rohrförmigen Körper gleichzeitig als Halterungen des Ringträgers in der Form zum Gießen des Kolbens dienen können Damit ist eine handhabbare und feste Funktionseinheit gegeben, die in die Gießform des Kolbens platzierbar ist. Die rohrförmigen Körper enden außerhalb des Kolbens, so dass die dadurch vorhandenen Kühlkanäle frei zugänglich sind. Dazu weisen die rohrförmigen Körper in Richtung der Kurbelwelle, so dass Ein- und Austritte der Kühlflüssigkeit für die kühlbaren Ringträger leicht zugänglich sind. Damit ergibt sich eine sehr vorteilhafte Herstellung von Kolben mit kühlbaren Ringträgern. Ein weiterer Vorteil besteht mit den rohrförmigen Körpern darin, dass auch beim Gießen des Kolbens mit den kühlbaren Ringträger Volumenschwarkungen ausgleichbar sind. Dadurch hervorgerufene Risse oder Poren werden weitestgehend vermieden.
Ein weiterer Vorteil der kühlbaren Ringfräger besteht darin, dass diese vor dem Gießen des Kolbens auf Dichtheit geprüft werden können, so dass nur dichte kühlbare Ringträger bei der Herstellung des Kolbens eingesetzt werden können. Resultat sind dichte Kolben.

Vorteilhafte Ausgestaltungen der Erfindung sind in den Patentansprüchen 2 bis 6 und 8 bis 11 angegeben.

Mehrere kühlbare Ringträger, die symmetrisch und parallel zueinander angeordnet und die mittels mehrerer dazwischen angeordneter und nach außen weisender rohrförmiger Körper versehen sind, nach der Weiterbildung des Patentanspruchs 3 stellt eine kompakte Bauform dar. Diese kann leicht in der Form des Kolbens platziert werden, so dass sich eine einfache und sehr ökonomische Realisierung des Kolbens mit kühlbaren Ringträgern ergibt. Ein weiterer Vorteil besteht mit der Möglichkeit der Prüfung auf Dichtheit der Baugruppe. Die Qualität derartiger Kolben steigt wesentlich.

Eine Anordnung der Endenbereiche der rohrförmigen Körper im Kühlkanal nach der Weiterbildung des Patentanspruchs 3 führt zu einer Düsenwirkung. Das Kühlmittel tritt gerichtet ein und verwirbelt im Kühlkanal, so dass die Kühlwirkung steigt. Dieser Bereich des rohrförmigen Körpers kann auch in Richtung dessen Ende im Querschnitt dis- oder kontinuierlich abnehmen, so dass unter der Voraussetzung eines gleichen Druckes eine wesentlich größere Fließgeschwindigkeit des Kühlmittels erreicht wird. Die Verwirbelung des Kühlmittels im Kühlkanal wird wesentlich erhöht.

Günstige Realisierungen der Verbindungen zwischen den Schenkeln des Kühlkanalbleches und des Ringkörpers sind durch die Weiterbildungen der Patentansprüche 4, 5, 8 und 9 gegeben, wobei diese Verbindung durch mehrere Schweißnähte ausgebildet ist. Die äußere oder die äußeren Schweißnähte sind Überlappungen, so dass dichte Verbindungen herstellbar sind. Risse oder Spalten durch Ausgasen von Stoffen des Kühlkanalbleches und des Ringkörpers werden überdeckt.
Bei den Weiterbildungen der Patentansprüche 5 und 9 werden vorteilhafterweise neben der die Bestandteile verbindenden ersten Schweißnaht in Richtung Ringkörper zwei weitere sich überlappende und in Richtung des Kühlkanalbleches eine die erste Schweißnaht überlappende Schweißnaht aufgebracht. Diese dienen der Abdeckung sich ausbildender Risse und Spalten im Ringkörper und dem Kühlkanalblech, so dass ein dichter Kühlkanal realisiert wird. Diese Risse und Spalten entstehen durch Ausgasen des Ringkörpers.

Die Platzierungen der Anfangsbereiche und der Endbereiche der Schweißnähte an verschiedenen Stellen des jeweiligen Kreisbogens der einzelnen Schweißnähte nach der Weiterbildung des Patentanspruchs 6 gewährleisten dichte Verbindungen des Kühlkanalbleches und des Ringkörpers.

Günstige Mengen von zugeführten Metallpulver je Schweißnaht sind nach der Weiterbildung des Patentanspruchs 10 folgende:
Menge für die zweite Schweißnaht kleiner als die Menge für die erste Schweißnaht, Menge für die dritte Schweißnaht kleiner als die Menge für die zweite Schweißnaht und
Menge für die vierte Schweißnaht gleich oder annähernd gleich der Menge für die zweite Schweißnaht.
Die geringeren Mengen der Schweißnähte zwei bis vier dienen dem Überdecken von Rissen und/oder Spalten, die durch Ausgasen entstehen. Geringere Mengen mit äquivalent geringeren Leistungen führen zu einem kleineren Aufschmelzen des jeweiligen Stoffes, so dass ein Ausgasen von Bestandteilen dieser Stoffe verringert wird.

Günstige Parameter sind nach der Weiterbildung des Patentanspruchs 11 Leistungen größer/gleich 900 W und kleiner/gleich 1800 W bei Vorschubgeschwindigkeiten gleich/größer 20 mm/s und kleiner/gleich 100 mm/s. Dadurch werden die zu schweißenden Bereiche des Ringkörpers und des Kühlkanalbleches so aufgeschmolzen, dass eine dichte Verbindung gegeben ist.

Ausführungsbeispiele der Erfindung sind in den Zeichnungen dargestellt und werden im folgenden näher beschrieben.
Es zeigen:
- Fig. 1: eine prinzipielle Darstellung eines kühlbaren Ringträgers für innengekühlte Kolbenringe mit Öffnungen für rohrförmige Körper,
- Fig. 2: eine prinzipielle Schnittdarstellung eines kühlbaren Ringträgers für innengekühlte Kolbenringe mit einer Öffnung und einem rohrförmigen Körper,
- Fig. 3: eine prinzipielle Schnittdarstellung mehrerer über einen rohrförmigen Körper miteinander verbundener kühlbarer Ringträger und
- Fig. 4: eine Schnittdarstellung einer Verbindungsstelle zwischen einem Endenbereich eines Schenkels des Kühlkanalbleches und dem Ringkörper.

Nachfolgend werden kühlbare Ringträger 1 für innengekühlte Kolbenringe und Verfahren zu deren Herstellung jeweils zusammen näher erläutert.

### 1. Ausführungsbeispiel

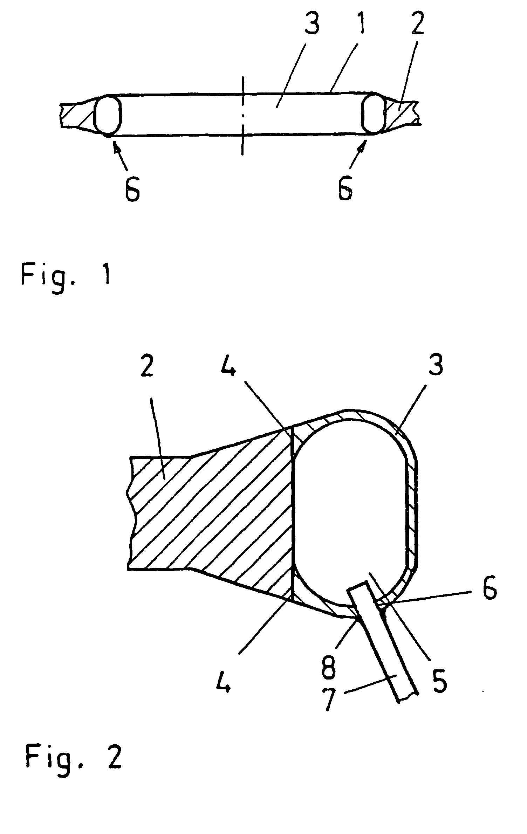

Ein kühlbarer Ringträger 1 (Darstellung in der Fig. 1) für innengekühlte Kolbenringe besteht im Wesentlichen aus einem Ringkörper 2 und einem Kühlkanalblech 3. Das Kühlkanalblech 3 ist kreisringförmig ausgebildet, besitzt im Querschnitt überwiegend ein U-Form. Das Kühlkanalbleches 3 weist Öffnungen 6 auf, wobei sich diese vorteilhafterweise in einem Schenkel befinden. Das Kühlkanalblech 3 befindet sich im Innenraum des Ringkörpers 2. Die Endenbereiche der Schenkel des Kühlkanalbleches 3 sind mit wenigstens einer Kante des Ringkörpers 2 so verbunden, dass die Innenfläche des Kühlkanalbleches 3 und die Kante des Ringkörpers 2 einen ringförmigen Hohlraum 5 begrenzen. Dieser Hohlraum 5 ist der Kühlkanal für ein Kühlmittel, das durch diesen Kühlkanal strömt. Dazu sind rohrförmige Körper 7 mit dem Kühlkanalblech 3 verbunden. In der Fig. 2 ist prinzipiell ein Querschnitt eines kühlbaren Ringträgers 1 einschließlich eines rohrförmigen Körpers 7 dargestellt. Das Kühlkanalblech 3 und der Ringkörper 2 sind mittels Schweißnähten 4 miteinander fest und dicht verbunden. Zur Anwendung kommt ein Nd:YAG- oder Hochleistungsdiodenlaser im cw-Betrieb (cw - continous wave, zeitlich konstante Strahlung) mit einer Leistung von größer/gleich 900 W und kleiner/gleich 1800 W. Die Verbindung eines Schenkels des kühlkanalbleches 3 mit dem Ringkörper 2 besteht aus wenigstens einer Schweißnaht 4. Dabei wird während des Schweißens ein Metallpulver als Zusatzwerkstoff unter Schutzgas zugefuhrt.
Die Schweißnaht entsteht durch Führung von Laserstrahlen überwiegend oder vollstanding auf dem Ringkörper 2 durch teilweises Aufschmelzen des Ringkörpers 2, teilweises Aufschmelzen des Kühlkanalbleches 3 und Aufschmelzen des aufgebrachten Metallpulvers.
Nach der Positionierung des Anfangsbereiches der Verbindungsstelle zwischen dem Ringkörper 2 und dem Kühlkanalblech 3 wird der Laser eingeschalten. Damit ergeben sich bei gleichzeitigem Start der Bewegung des Ringkörpers 2 einschließlich des Kühlkanalbleches 3 gegenüber den Laserstrahlen, oder in einer Ausführungsform der Bewegung der Laserstrahlen gegenüber dem Ringkörper 2 einschließlich des Kühlkanalbleches 3, durch die damit verbundene Einschaltverzögerung der Laserstrahlen sich nicht vollstandig ausbildende Schweißnähte 4 in diesem Bereich.
Der Verfahrweg des kühlbaren Ringträgers 1 oder der Laserstrahlen ist deshalb jeweils größer 360°, wobei sich die Anfänge und die Enden der Schweißnähte 4 an unterschiedlichen Stellen befinden. Die Vorschubgeschwindigkeit des Ringträgers 2 einschließlich des Kühlkanalbleches 3 ist gleich/größer 20 mm/s und kleiner/bleich 100 mm/s.
Jeweils ein rohrförmiger Körper 7 ist an oder in der Öffnung 6 angeordnet und über wenigstens eine weitere mit Laserstrahlen des Lasers erzeugte fünfte Schweißnaht 8 so mit dem Schenkel des Kühlkanalbleches 3 verbunden, dass der Kühlkanal und der Innenraum des rohrförmigen Körpers 7 einen gemeinsamen Hohlraum bilden. Der Endenbereich des rohrförmigen Körpers 7 ragt dabei vorteilhafterweise in den Kühlkanal ein. Damit ist der Hohlraum 5 als Kühlkanal eines kühlbaren Ringträgers 1 über rohrförmige Körper 7 zugänglich. Die rohrförmigen Körper 7 dienen der Führung des Kühlmittels.

### 2. Ausführungsbeispiel

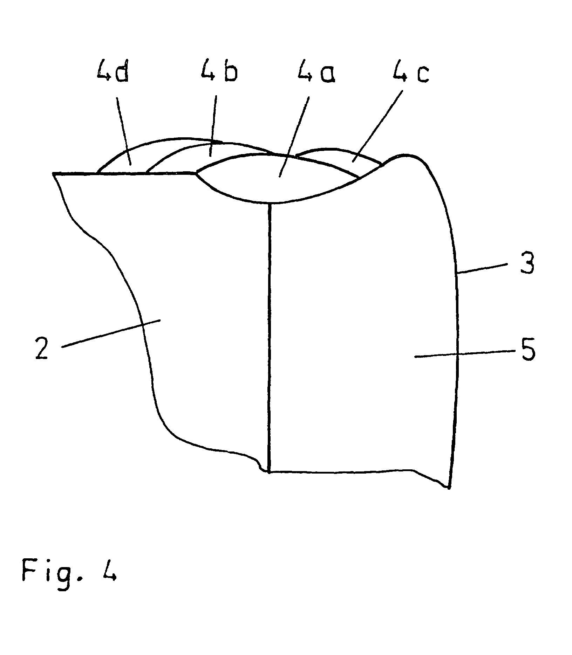

Ein kühlbarer Ringträger 1 (Darstellung in der Fig. 1) für innengekühlte Kolbenringe besteht im Wesentlichen aus einem Ringkörper 2 und einem Kühlkanalblech 3. Der Ringkörper 2 ist zum Beispiel ein Gusskörper z.B. ein austenitischer Guss als A-Grafit oder E-Grafit. Das Kühlkanalblech 3 ist kreisringförmig ausgebildet, besitzt im Querschnitt überwiegend ein U-Form und besteht zum Beispiel aus einem Edelstahl. Wenigstens ein Schenkel des Kühlkanalbleches 3 weist Öffnungen 6 auf. Das Kühlkanalblech 3 befindet sich im Innenraum des Ringkörpers 2. Die Endenbereiche der Schenkel des Kühlkanalbleches 3 sind mit wenigstens einer Kante des Ringkörpers 2 so verbunden, dass die Innenfläche des Kühlkanalbleches 3 und die Kante des Ringkörpers 2 einen ringförmigen Hohlraum 5 begrenzen. Dieser Hohlraum 5 ist der Kühlkanal für ein Kühlmittel, das durch diesen Kühlkanal strömt. Dazu sind rohrförmige Körper 7 mit dem Kühlkanalblech 3 verbunden. In der Fig. 2 ist prinzipiell ein Querschnitt eines kühlbaren Ringträgers 1 einschließlich eines rohrförmigen Körpers 7 dargestellt. Das Kühlkanalblech 3 und der Ringkörper 2 sind mittels Schweißnähten 4 miteinander fest und dicht verbunden. Zur Anwendung kommt ein Nd:YAG- oder Hochleistungsdiodenlaser im cw-Betrieb (cw - continous wave, zeitlich konstante Strahlung) mit einer Leistung von größer/gleich 900 W und kleiner/gleich 1800 W. Die Verbindung eines Schenkels des Kühlkanalbleches 3 mit dem Ringkörper 2 besteht aus vier Schweißnähten 4a, 4b, 4c, 4d. Dabei wird während des Schweißens zum Beispiel ein Edelstahlpulver als Zusatzwerkstoff unter Schutzgas zugeführt.
Die erste Schweißnaht 4a entsteht durch Führung von Laserstrahlen überwiegend oder vollständig auf dem Ringkörper 2 durch teilweises Aufschmelzen des Ringkörpers 2, teilweises Aufschmelzen des Kühlkanalbleches 3 und Aufsclunelzen des aufgebrachten Edelstahlpulvers. Die zweite Schweißnaht 4b wird durch Führung von Laserstrahlen entlang der Verbindung zwischen Ringkörper 2 und erster Schweißnaht 4a durch teilweises Aufschmelzen des Ringkörpers 2, teilweises Aufschmelzen der ersten Schweißnaht 4a und Aufschmelzen des aufgebrachten Edelstahlpulvers aufgebracht. Die dritte Schweißnaht 4c entsteht durch Führung von Laserstrahlen entlang der Verbindung zwischen Kühlkanalblech 3 und erster Schweißnaht 4a und überwiegend oder vollständig auf der ersten Schweißnaht 4a durch teilweises Aufschmelzen des Kühlkanalbleches 3, teilweises Aufschmelzen der ersten Schweißnaht 4a und Aufschmelzen des Edelstahlpulvers. Die vierte Schweißnaht 4d wird durch Führung von Laserstrahlen entlang der Verbindung zwischen Ringkörper 2 und zweiter Schweißnaht 4b und überwiegend oder vollständig auf der zweiten Schweißnaht 4b durch teilweises Aufschmelzen des Ringkörpers 2, teilweises Aufschmelzen der zweiten Schweißnaht 4b und Aufschmelzen des Edelstahlpulvers erzeugt. Die Fig. 4 zeigt eine Schnittdarstellung einer Verbindungsstelle zwischen einem Endenbereich eines Schenkels des Kühlkanalbleches 3 und dem Ringkorper 2. Die Mengen zugeführten Edelstahlpulvers je Schweißnaht 4 sind dabei vorteilhafterweise und als Beispiel wie folgt:
- Menge der ersten Schweißnaht 4a gleich 100 %,
- Menge der zweiten Schweißnaht 4b gleich 60 % der ersten Schweißnaht 4a,
- Menge der dritten Schweißnaht 4c gleich 30 % der ersten Schweißnaht 4a und
- Menge der vierten Schweißnaht 4d gleich 60 % der ersten Schweißnaht 4a.

Die Versätze der Laserstrahlen sind dabei zum Beispiel größer/gleich 0,1 mm und kleiner/gleich 0,2 mm. Nach der Positionierung des Anfangsbereiches der Verbindungsstelle zwischen dem Ringkörper 2 und dem Kühlkanalblech 3 wird der Laser eingeschalten. Damit ergeben sich bei gleichzeitigem Start der Bewegung des Ringkörpers 2 einschließlich des Kühlkanalbleches 3 gegenüber den Laserstrahlen, oder in einer Ausführungsform der Bewegung der Laserstrahlen gegenüber dem Ringkörper 2 einschließlich des Kuhlkanalbleches 3, durch die damit verbundene Einschaltverzögerung der Laserstrahlen sich nicht vollständig ausbildende Schweißnähte 4 in diesem Bereich. Der Verfahrweg des kühlbaren Ringträgers 1 oder der Laserstrahlen ist deshalb jeweils größer 360°, wobei sich die Anfänge und die Enden der Schweißnähte 4 an unterschiedlichen Stellen befinden. Die Vorschubgeschwindigkeit des Ringträgers 2 einschließlich des Kühlkanalbleches 3 ist gleich/größer 20 mm/s und kleiner/gleich 100 mm/s. Jeweils ein rohrförmiger Körper 7 ist an oder in der Öffnung 6 angeordnet und über wenigstens eine weitere mit Laserstrahlen des Lasers erzeugte fünfte Schweißnaht 8 so mit dem Schenkel des Kühlkanalbleches 3 verbunden, dass der Kühlkanal und der Innenraum des rohrförmigen Körpers 7 einen gemeinsamen Hohlraum bilden. Der Endenbereich des rohrförmigen Körpers 7 ragt dabei vorteilhafterweise in den Kühlkanal ein. Damit ist der Hohlraum 5 als Kühlkanal eines kühlbaren Ringträgers 1 über rohrförmige Körper 7 zugänglich. Die rohrförmigen Körper 7 dienen der Führung des Kühlmittels.

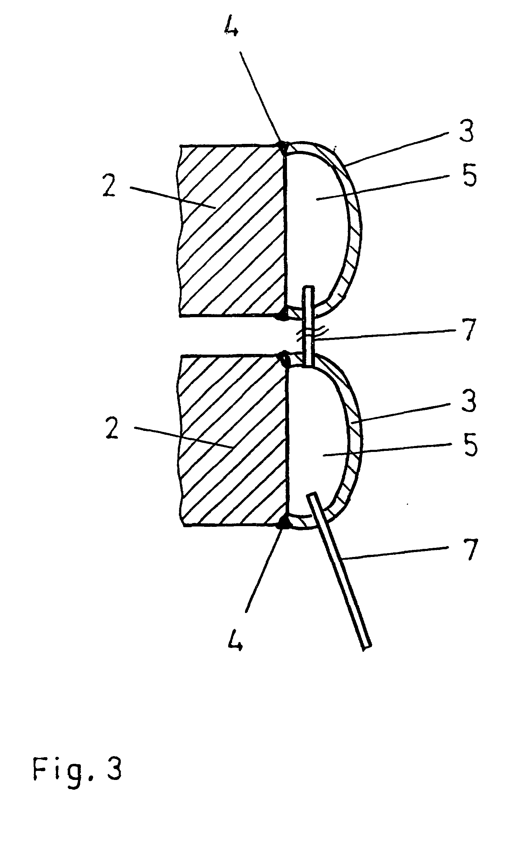

In einer weiteren Ausführungsform der Ausführungsbeispiele können mehrere kühlbare Ringträger 1 übereinander so angeordnet sein, dass diese eine gemeinsame Symmetrieachse besitzen (Darstellung in der Fig. 3). Die Verbindung der Hohlräume 5 der kühlbaren Ringträger 1 erfolgt über rohrförmige Körper 7 zwischen den kühlbaren Ringträgem 1. Dabei ergibt sich eine kompakte Einheit, die leicht in einer Gussform für den Kolben platziert werden kann. Der in Richtung Kurbelwelle weisende äußere kühlbare Ringträger 1 besitzt nach außen weisende und endende rohrförmige Körper 7, die der Führung des Kühlmittels zu oder von den kühlbaren Ringträgern 1 dienen.

## Patentansprüche

1. Kühlbarer Ringträger für innengekühlte Kolbenringe bestehend aus einem als Kreisring ausgeführten Ringkörper und einem Kühlkanalblech, wobei das Kühlkanalblech ein Bestandteil des Kühlkanals ist, **dadurch gekennzeichnet, dass** das Kühlkanalblech (3) im Querschnitt überwiegend eine U-Form darstellt und Öffnungen (6) im Schenkel aufweist und die Endenbereiche der Schenkel des Kühlkanalbleches (3) mit Kantenbereichen des Ringkörpers (2) so verbunden sind, dass das Kühlkanalblech (3) und wenigstens die den Innenraum des Ringkörpers (2) begrenzende Fläche einen Hohlraum (5) als Kühlkanal begrenzen, wobei die Verbindung Schweißnähte (4) aufweist, die durch Laserstrahlen mindestens eines Lasers im cw-Betrieb unter Zuführung eines Metallpulvers und eines Schutzgases mit Überlappungen und einem Versatz in Richtung des Ringkörpers (2) und einem Verfahrweg jeweils größer 360° hergestellt sind, und dass jeweils ein rohrförmiger Körper (7) an oder in der Öffnung (6) angeordnet ist, wobei die rohrförmigen Körper (7) über wenigstens eine weitere Schweißnaht (8) so mit dem Schenkel des Kühlkanalbleches (3) verbunden sind, dass der Kühlkanal und der Innenraum der rohrförmigen Körper (7) einen gemeinsamen Hohlraum bilden.

2. Kühlbarer Ringträger nach Patentanspruch 1, **dadurch gekennzeichnet, dass** mehrere kühlbare Ringträger (1) symmetrisch und parallel zueinander angeordnet sind, dass mehrere rohrförmige Körper (7) zwischen den kühlbaren Ringträgern (1) angeordnet sind und dass einer der äußeren kühlbaren Ringträger (1) mit nach außen weisenden rohrförmigen Körpern (7) versehen ist.

3. Kühlbarer Ringträger nach Patentanspruch 1, **dadurch gekennzeichnet, dass** ein Endenbereich des rohrförmigen Körpers 7 im Kühlkanal so angeordnet ist, dass der Endenbereich in den Kühlkanal hineinragt.

4. Kühlbarer Ringträger nach Patentanspruch 1, **dadurch gekennzeichnet, dass** die Verbindungsstelle zwischen einem Schenkel des kreisringförmigen und im Querschnitt überwiegend eine U-Form darstellenden Kühlkanalbleches (3) und dem Ringkörper (2) eine erste durch teilweises Aufschmelzen des Ringkörpers (2), teilweises Aufschmelzen des Kühlkanalbleches (3) und Aufschmelzen des aufgebrachten Metallpulvers erzeugte Schweißnaht (4a) und eine zweite durch teilweises Aufschmelzen des Ringkörpers (2), teilweises Aufschmelzen der ersten Schweißnaht (4a) und Aufschmelzen des aufgebrachten Metallpulvers erzeugte Schweißnaht (4b) ist und dass die zweite (4b) Schweißnaht (4d) eine durch Schweißen der ersten Schweißnaht (4a) auftretende Risse und/oder Spalten im Ringkörper (2) überdeckende Schweißnaht (4b) ist.

5. Kühlbarer Ringträger nach Patentanspruch 1, **dadurch gekennzeichnet, dass** die Verbindungsstelle zwischen einem Schenkel des kreisringförmigen und im Querschnitt überwiegend eine U-Form darstellenden Kühlkanalbleches (3) und dem Ringkörper (2) eine erste durch teilweises Aufschmelzen des Ringkörpers (2), teilweises Aufschmelzen des Kühlkanalbleches (3) und Aufschmelzen des aufgebrachten Metallpulvers erzeugte Schweißnaht (4a), eine zweite durch teilweises Aufschmelzen des Ringkörpers (2), teilweises Aufschmelzen der ersten Schweißnaht (4a) und Aufschmelzen des aufgebrachten Metallpulvers erzeugte Schweißnaht (4b), eine dritte durch teilweises Aufschmelzen des Kühlkanalbleches (3), teilweises Aufschmelzen der ersten Schweißnaht (4a) und Aufschmelzen des Metallpulvers erzeugte Schweißnaht (4c) und eine vierte durch teilweises Aufschmelzen des Ringkörpers (2), teilweises Aufschmelzen der zweiten Schweißnaht (4b) und Aufschmelzen des Metallpulvers erzeugte Schweißnaht (4d) ist und dass die zweite (4b), dritte (4c) und vierte Schweißnaht (4d) durch Schweißen der ersten Schweißnaht (4a) auftretende Risse und/oder Spalten im Ringkörper (2) und Kühlkanalblech (3) überdeckende Schweißnähte (4b, 4c, 4d) sind.

6. Kühlbarer Ringträger nach den Patentansprüchen 1 bis 5, **dadurch gekennzeichnet, dass** sich die Anfangsbereiche und die Endbereiche der Schweißnähte (4) an verschiedenen Stellen des jeweiligen Kreisbogens der einzelnen Schweißnähte (4) befinden.

7. Verfahren zur Herstellung von kühlbaren Ringträgern nach Patentanspruch 1, **dadurch gekennzeichnet, dass** die Endenbereiche der Schenkel des kreisringförmigen und im Querschnitt überwiegend eine U-Form darstellenden Kühlkanalbleches (3) mit Öffnungen (6) durch Laserstrahlen mindestens eines Lasers im cw-Betrieb mit Kantenbereichen des Ringkörpers (2) jeweils so unter Zuführung eines Schutzgases und eines Metallpulvers als Zusatzwerkstoff geschweißt werden, dass durch Führung von Laserstrahlen überwiegend oder vollständig auf dem Ringkörper (2) eine erste Schweißnaht (4a) durch teilweises Aufschmelzen des Ringkörpers (2), teilweises Aufschmelzen des Kühlkanalbleches (3) und Aufschmelzen des aufgebrachten Metallpulvers erzeugt wird, dass der Verfahrweg des kühlbaren Ringträgers (1) oder der Laserstrahlen größer 360° ist und dass die Wandung jeweils eines rohrförmigen Körpers (7) und der Randbereich jeweils einer Öffnung (6) über mindestens eine fünfte Schweißnaht (8) miteinander verbunden werden.

8. Verfahren zur Herstellung von kühlbaren Ringträgern nach Patentanspruch 7, **dadurch gekennzeichnet, dass** die Endenbereiche der Schenkel des kreisringförmigen und im Querschnitt überwiegend eine U-Form darstellenden Kühlkanalbleches (3) mit Öffnungen (6) durch Laserstrahlen mindestens eines Lasers im cw-Betrieb mit Kantenbereichen des Ringkörpers (2) jeweils so unter Zuführung eines Schutzgases und eines Metallpulvers als Zusatzwerkstoff geschweißt werden, dass durch Führung von Laserstrahlen überwiegend oder vollständig auf dem Ringkörper (2) eine erste Schweißnaht (4a) durch teilweises Aufschmelzen des Ringkörpers (2), teilweises Aufschmelzen des Kühlkanalbleches (3) und Aufschmelzen des aufgebrachten Metallpulvers und dass durch Führung von Laserstrahlen entlang der Verbindung zwischen Ringkörper (2) und erster Schweißnaht (4a) eine zweite Schweißnaht (4b) durch teilweises Aufschmelzen des Ringkörpers (2), teilweises Aufschmelzen der ersten Schweißnaht (4a) und Aufschmelzen des aufgebrachten Metallpulvers erzeugt werden, dass der Verfahrweg des kühlbaren Ringträgers (1) oder der Laserstrahlen jeweils größer 360° ist, dass sich die Anfänge und die Enden der Schweißnähte (4) an unterschiedlichen Stellen des jeweiligen Kreisbogens befinden und dass die Wandung jeweils eines rohrförmigen Körpers (7) und der Randbereich jeweils einer Öffnung (6) über mindestens eine fünfte Schweißnaht (8) miteinander verbunden werden.

9. Verfahren zur Herstellung von kühlbaren Ringträgern nach Patentanspruch 7, **dadurch gekennzeichnet, dass** die Endenbereiche der Schenkel des kreisringförmigen und im Querschnitt überwiegend eine U-Form darstellenden Kühlkanalbleches (3) mit Öffnungen (6) durch Laserstrahlen mindestens eines Lasers im cw-Betrieb mit Kantenbereichen des Ringkörpers (2) jeweils so unter Zuführung eines Schutzgases und eines Metallpulvers als Zusatzwerkstoff geschweißt werden, dass durch Führung von Laserstrahlen überwiegend oder vollständig auf dem Ringkörper (2) eine erste Schweißnaht (4a) durch teilweises Aufschmelzen des Ringkörpers (2), teilweises Aufschmelzen des Kühlkanalbleches (3) und Aufschmelzen des aufgebrachten Metallpulvers erzeugt wird, dass durch Führung von Laserstrahlen entlang der Verbindung zwischen Ringkörper (2) und erster Schweißnaht (4a) eine zweite Schweißnaht (4b) durch teilweises Aufschmelzen des Ringkörpers (2), teilweises Aufschmelzen der ersten Schweißnaht (4a) und Aufschmelzen des aufgebrachten Metallpulvers, dass durch Führung von Laserstrahlen entlang der Verbindung zwischen Kühlkanalblech (3) und erster Schweißnaht (4a) und überwiegend oder vollständig auf der ersten Schweißnaht (4a) eine dritte Schweißnaht (4c) durch teilweises Aufschmelzen des Kühlkanalbleches (3), teilweises Aufschmelzen der ersten Schweißnaht (4a) und Aufschmelzen des Metallpulvers und dass durch Führung von Laserstrahlen entlang der Verbindung zwischen Ringkörper (2) und zweiter Schweißnaht (4b) und überwiegend oder vollständig auf der zweiten Schweißnaht (4b) eine vierte Schweißnaht (4d) durch teilweises Aufschmelzen des Ringkörpers (2), teilweises Aufschmelzen der zweiten Schweißnaht (4b) und Aufschmelzen des Metallpulvers erzeugt werden, dass der Verfahrweg des kühlbaren Ringträgers (1) oder der Laserstrahlen jeweils größer 360° ist, dass sich die Anfänge und die Enden der Schweißnähte (4) an unterschiedlichen Stellen der Kreisbögen befinden und dass die Wandung jeweils eines rohrförmigen Körpers (7) und der Randbereich jeweils einer Öffnung (6) über mindestens eine fünfte Schweißnaht (8) miteinander verbunden werden.

10. Verfahren zur Herstellung von kühlbaren Ringträgem nach Patentanspruch 9, **dadurch gekennzeichnet, dass** die Menge des Metallpulvers für die zweite Schweißnaht (4b) kleiner als die Menge des Metallpulvers für die erste Schweißnaht (4a), dass die Menge des Metallpulvers für die dritte Schweißnaht (4c) kleiner als die Menge des Metallpulvers für die zweite Schweißnaht (4b) und dass die Menge des Metallpulvers für die vierte Schweißnaht (4d) gleich oder annähernd gleich der Menge des Metallpulvers für die zweite Schweißnaht (4b) sind.

11. Verfahren zur Herstellung von kühlbaren Ringträgern nach Patentanspruch 7, **dadurch gekennzeichnet, dass** die Leistung des Lasers größer/gleich 900 W und kleiner/gleich 1800 W und dass die Vorschubgeschwindigkeit gleich/größer 20 mm/s und kleiner/gleich 100 mm/s sind.

## Claims

1. A coolable ring frame for enclosed ventilated piston rings consisting of a ring body designed as an annular ring and a cooling duct plate, said cooling duct plate being a component of the cooling duct, **characterized in that** the cross section of the cooling duct plate (3) is generally U-shaped and comprises openings (6) in its limbs and **in that** the end sections of the limbs of the cooling duct plate (3) are connected with the edge regions of the ring body (2) in such a way that the cooling duct plate (3) and at least the surface delimiting the interior of the ring body (2) define a hollow space (5) as cooling duct, said connection comprising welds (4) that are produced by laser beams using at least one laser in cw operation and adding a metal powder and an inert gas, said welds being produced with overlaps and at an offset towards the ring body (2) and with a travel in excess of 360°, and **in that** a tube-shaped body (7) is mounted onto or into opening (6), said tube-shaped bodies (7) being connected via at least one other weld (8) to the limb of the cooling duct plate (3) in such a way that the cooling duct and the interiors of the tube-shaped bodies (7) form a joint hollow.

2. The coolable ring frame according to claim 1, **characterized in that** multiple coolable ring frames (1) are arranged symmetrically and in parallel, **in that** multiple tube-shaped bodies (7) are arranged between the coolable ring frames (1), and **in that** one of the outer coolable ring frames (1) comprises tube-shaped bodies (7) that point outward.

3. The coolable ring frame according to claim 1, **characterized in that** an end region of the tube-shaped body (7) is arranged in the cooling duct so that said end region protrudes into the cooling duct.

4. The coolable ring frame according to claim 1, **characterized in that** the joint of a limb of the annular cooling duct plate (3) with its generally U-shaped cross section and the ring body (2) is a first weld seam (4a) produced by partially fusing the ring body (2), partially fusing the cooling duct plate (3), and fusing the metal powder applied, and a second weld seam (4b) produced by partially fusing the ring body (2), partially fusing the first weld seam (4a), and fusing the metal powder applied, and **in that** the second weld seam (4b) is a weld seam (4b) that covers cracks and/or fissures occurring in the ring body (2) due to welding the first weld seam (4a).

5. The coolable ring frame according to claim 1, **characterized in that** the joint of a limb of the annular cooling duct plate (3) with its generally U-shaped cross section and the ring body (2) is a first weld seam (4a) produced by partially fusing the ring body (2), partially fusing the cooling duct plate (3), and fusing the metal powder applied, a second weld seam (4b) produced by partially fusing the ring body (2), partially fusing the first weld seam (4a), and fusing the metal powder applied, a third weld seam (4c) produced by partially fusing the cooling duct plate (3), partially fusing the first weld seam (4a), and fusing the metal powder, and a fourth weld seam (4d) produced by partially fusing the ring body (2), partially fusing the second weld seam (4b), and fusing the metal powder, and **in that** the second (4b), third (4c), and fourth (4d) weld seams are weld seams (4b, 4c, 4d) that cover cracks and/or fissures occurring in the ring body (2) and the cooling duct plate (3) due to welding the first weld seam (4a).

6. The coolable ring frame according to claims 1 through 5, **characterized in that** the start sections and the end sections of the weld seams (4) are at various sites of the respective circular arc of each weld seam (4).

7. A method for producing coolable ring frames according to claim 1, **characterized in that** the end sections of the limbs of the annular cooling duct plate (3) with a generally U-shaped cross section and openings (6) are welded to the edge regions of the ring body (2) using the laser beams of at least one laser in cw operation while adding an inert gas and metal powder as an additional material so that the laser beams are guided to create a first weld seam (4a) mainly or completely on the ring body (2) by partially fusing said ring body (2), partially fusing the cooling duct plate (3), and fusing the metal powder applied, **in that** the travel of the coolable ring frame (1) or the laser beams is greater than 360°, and **in that** the wall of one tube-shaped body (7) and the edge region of one opening (6), respectively, are joined via at least one fifth weld seam (8).

8. The method for producing coolable ring frames according to claim 7, **characterized in that** the end sections of the limbs of the annular cooling duct plate (3) with a generally U-shaped cross section and openings (6) are welded to the edge regions of the ring body (2) using the laser beams of at least one laser in cw operation while adding an inert gas and metal powder as an additional material so that the laser beams are guided to create a first weld seam (4a) mainly or completely on the ring body (2) by partially fusing said ring body (2), partially fusing the cooling duct plate (3), and fusing the metal powder applied, that laser beams are guided along the joint of the ring body (2) and the first weld seam (4a) to create a second weld seam (4b) by partially fusing the ring body (2), partially fusing the first weld seam (4a), and fusing the metal powder applied, **in that** the travel of the coolable ring frame (1) or the laser beams is greater than 360°, **in that** the start and end points of the weld seams (4) are at various sites of the respective circular arcs, and **in that** the wall of one tube-shaped body (7) and the edge region of one opening (6), respectively, are joined via at least one fifth weld seam (8).

9. The method for producing coolable ring frames according to claim 7, **characterized in that** the end sections of the limbs of the annular cooling duct plate (3) with a generally U-shaped cross section and openings (6) are welded to the edge regions of the ring body (2) using the laser beams of at least one laser in cw operation while adding an inert gas and metal powder as an additional material so that the laser beams are guided to create a first weld seam (4a) mainly or completely on the ring body (2) by partially fusing said ring body (2), partially fusing the cooling duct plate (3), and fusing the metal powder applied, that laser beams are guided along the joint of the ring body (2) and the first weld seam (4a) to create a second weld seam (4b) by partially fusing the ring body (2), partially fusing the first weld seam (4a), and fusing the metal powder applied, that laser beams are guided along the joint of the cooling duct plate (3) and the first weld seam (4a) to create a third weld seam (4b) mainly or completely on the first weld seam (4a) by partially fusing the cooling duct plate (3), partially fusing the first weld seam (4a), and fusing the metal powder applied, and that laser beams are guided along the joint of the ring body (2) and the second weld seam (4b) to create a fourth weld seam (4d) mainly or completely on the second weld seam (4b) by partially fusing the ring body (2), partially fusing the second weld seam (4b), and fusing the metal powder applied, **in that** the travel of the coolable ring frame (1) or the laser beams is greater than 360°, **in that** the start and end points of the weld seams (4) are at various sites of the respective circular arcs, and **in that** the wall of one tube-shaped body (7) and the edge region of one opening (6), respectively, are joined via at least one fifth weld seam (8).

10. The method for producing coolable ring frames according to claim 9, **characterized in that** the quantity of metal powder used for the second weld seam (4b) is smaller than the quantity of metal powder used for the first weld seam (4a), that the quantity of metal powder used for the third weld seam (4c) is smaller than the quantity of metal powder used for the second weld seam (4b), and that the quantity of metal powder used for the fourth weld seam (4d) is equal or approximately equal to the quantity of metal powder used for the second weld seam (4b).

11. The method for producing coolable ring frames according to claim 7, **characterized in that** the output of the laser is greater than/equal to 900 W and less than/equal to 1800 W, and that the rate of feed is 20 mm/s or greater and less than/equal to 100 mm/s.

## Revendications

1. Anneau de support réfrigéré pour segments de piston à réfrigération intérieure qui est composé d'un corps circulaire conçu sous forme de cercle et d'une tôle servant au canal de réfrigération, cette tôle faisant partie même du canal de réfrigération, **caractérisé par le fait que** la coupe transversale de la tôle servant au canal de réfrigération (3) représente plutôt une forme en U, que des orifices (6) sont disposés au niveau de l'aile de la tôle, et que les bouts arrière des ailes de la tôle servant au canal de réfrigération (3) sont soudés aux bords du corps circulaire (2) de telle sorte que la tôle servant au canal de réfrigération (3) et au moins la surface limitant l'intérieur du corps circulaire (2) forment la limite d'un espace creux (5) qui, lui, sert de canal de réfrigération, où les joints présentent des soudures (4) qui sont produites en mode CW et à l'aide de rayons laser qui, eux, proviennent d'au moins un laser, en y ajoutant une poudre métallique et un gaz de protection et en utilisant des recouvrements ainsi qu'un décentrage existant par rapport au corps circulaire (2) et un déplacement supérieur à 360°, où qu'à chaque orifice (6) - soit directement sur l'orifice, soit à son intérieur - est disposé un corps tubulaire (7), ces corps tubulaires étant reliés, par au moins une soudure de plus (8) appliquée à l'aile de la tôle servant au canal de réfrigération (3), de telle sorte que le canal de réfrigération et l'intérieur du corps tubulaire (7) forment un espace creux commun.

2. Anneau de support réfrigéré selon la revendication 1, **caractérisé par le fait que** plusieurs anneaux de support (1) sont disposés sous forme symétrique et parallèle, que plusieurs corps tubulaires (7) sont disposés entre les anneaux de support réfrigérés (1), et que l'un des anneaux de support réfrigérés (1) est muni de corps tubulaires (7) montrant vers l'extérieur.

3. Anneau de support réfrigéré selon la revendication 1, **caractérisé par le fait que**, à l'intérieur du canal de réfrigération, un bout du corps tubulaire (7) est disposé de telle sorte qu'il dépasse à l'intérieur du canal de réfrigération.

4. Anneau de support réfrigéré selon la revendication 1, **caractérisé par le fait que** le joint entre l'une des ailes de la tôle circulaire servant au canal de réfrigération (3) dont la coupe transversale représente plutôt une forme en U, et le corps circulaire (2) constitue une première soudure (4a) qui est produite par la fusion partielle du corps circulaire (2) et de la tôle servant au canal de réfrigération (3) ainsi que par la fusion de la poudre métallique qui y est appliquée, qu'une deuxième soudure (4b) est produite par la fusion partielle du corps circulaire (2), de la tôle servant au canal de réfrigération (3) et de la soudure (4a) ainsi que par la fusion de la poudre métallique qui y est appliquée, et que la deuxième (4b) soudure (4d) constitue une soudure (4b) qui recouvre les fissures et/ou les fentes produites lors du soudage de la première soudure (4a) à l'intérieur du corps circulaire (2).

5. Anneau de support réfrigéré selon la revendication 1, **caractérisé par le fait que** le joint entre l'une des ailes de la tôle circulaire servant au canal de réfrigération (3) dont la coupe transversale représente plutôt une forme en U, et le corps circulaire (2) constitue une première soudure (4a) qui est produite par la fusion partielle du corps circulaire (2) et de la tôle servant au canal de réfrigération (3) ainsi que par la fusion de la poudre métallique qui y est appliquée, qu'une deuxième soudure (4b) est produite par la fusion partielle du corps circulaire (2), de la tôle servant au canal de réfrigération (3) et de la soudure (4a) ainsi que par la fusion de la poudre métallique qui y est appliquée, qu'une troisième soudure (4c) est produite par la fusion partielle de la tôle servant au canal de réfrigération (3) et de la première soudure (4a) ainsi que par la fusion de la poudre métallique, qu'une quatrième soudure (4d) est produite par la fusion partielle du corps circulaire (2) et de la deuxième soudure (4b) ainsi que par la fusion de la poudre métallique, et que les deuxième (4b), troisième (4c) et quatrième (4d) soudures constituent des soudures (4b, 4c, 4d) qui recouvrent les fissures et/ou les fentes produites lors du soudage de la première soudure (4a) à l'intérieur du corps circulaire (2) et de la tôle servant au canal de réfrigération (3).

6. Anneau de support réfrigéré selon les revendications 1 à 5, **caractérisé par le fait que** les bouts avant et arrière des soudures (4) se trouvent dans des endroits différents de l'arc de cercle de chaque soudure (4).

7. Procédé pour fabriquer des anneaux de support réfrigérés selon la revendication 1, **caractérisé par le fait que** les bouts arrière des ailes de la tôle circulaire servant au canal de réfrigération (3) dont la coupe transversale représente plutôt une forme en U, sont munis d'orifices (6) et que ces bouts arrière sont soudés de telle sorte, en mode CW et par rayons laser qui, eux, proviennent d'au moins un laser, aux bords du corps circulaire (2), en y ajoutant comme métal d'apport une poudre métallique et un gaz de protection, que grâce à l'impact des rayons laser, une première soudure (4a) est produite sur la plus grande partie ou même sur la surface entière du corps circulaire (2), cette soudure étant produite par la fusion partielle du corps circulaire (2) et de la tôle servant au canal de réfrigération (3) ainsi que par la fusion de la poudre métallique qui y est appliquée, que le déplacement de l'anneau de support réfrigéré (1) ou des rayons laser est toujours supérieur à 360°, et que la paroi de chaque corps tubulaire (7) et le bord de chaque orifice (6) sont joints d'au moins une soudure (8).

8. Procédé pour fabriquer des anneaux de support réfrigérés selon la revendication 7, **caractérisé par le fait que** les bouts arrière des ailes de la tôle circulaire servant au canal de réfrigération (3) dont la coupe transversale représente plutôt une forme en U, sont munis d'orifices (6) et que ces bouts arrière sont soudés, en mode CW et par rayons laser qui, eux, proviennent d'au moins un laser, aux bords du corps circulaire (2), en y ajoutant comme métal d'apport une poudre métallique et un gaz de protection, que grâce à l'impact des rayons laser, une première soudure (4a) est produite sur la plus grande partie ou même sur la surface entière du corps circulaire (2), cette soudure étant produite par la fusion partielle du corps circulaire (2) et de la tôle servant au canal de réfrigération (3) ainsi que par la fusion de la poudre métallique qui y est appliquée, que grâce à l'impact de rayons laser tout au long du joint entre le corps circulaire (2) et la première soudure (4a), une deuxième soudure (4b est produite par la fusion partielle du corps circulaire (2) et de la première soudure (4a) ainsi que par la fusion de la poudre métallique appliquée, que le déplacement de l'anneau de support réfrigéré (1) ou des rayons laser est toujours supérieur à 360°, que les bouts avant et arrière des soudures (4) se trouvent dans des endroits différents de chaque arc de cercle, et que la paroi de chaque corps tubulaire (7) et le bord de chaque orifice (6) sont joints à l'aide d'au moins une soudure (8).

9. Procédé pour fabriquer des anneaux de support réfrigérés selon la revendication 7, **caractérisé par le fait que** les bouts arrière des ailes de la tôle circulaire servant au canal de réfrigération (3) dont la coupe transversale représente plutôt une forme en U, sont munis d'orifices (6) et que ces bouts arrière sont soudés, en mode CW et par rayons laser qui, eux, proviennent d'au moins un laser, aux bords du corps circulaire (2), en y ajoutant comme métal d'apport une poudre métallique et un gaz de protection, que grâce à l'impact des rayons laser, une première soudure (4a) est produite sur la plus grande partie ou même sur la surface entière du corps circulaire (2), cette soudure étant produite par la fusion partielle du corps circulaire (2) et de la tôle servant au canal de réfrigération (3) ainsi que par la fusion de la poudre métallique qui y est appliquée, que grâce à l'impact des rayons laser, une première soudure (4a), une deuxième soudure (4b) est produite par la fusion partielle du corps circulaire (2) et de la première soudure (4a) ainsi que par la fusion de la poudre métallique qui y est appliquée, que grâce à l'impact des rayons laser tout au long du joint entre la tôle servant au canal de réfrigération (3) et la première soudure (4a), une troisième soudure (4c) est produite sur la plus grande partie ou même sur l'ensemble de la première soudure (4a), cette soudure étant produite par la fusion partielle du corps circulaire (2) et de la tôle servant au canal de réfrigération (3) ainsi que par la fusion de la poudre métallique, et que grâce à l'impact des rayons laser tout au long du joint entre le corps circulaire (2) et la deuxième soudure (4b), une quatrième soudure (4d) est produite par la fusion partielle du corps circulaire (2) et de la deuxième soudure (4b) ainsi que par la fusion de la poudre métallique, que le déplacement de l'anneau de support réfrigéré (1) ou des rayons laser est toujours supérieur à 360°, que les bouts avant et arrière des soudures (4) se trouvent dans des endroits différents des arcs de cercle, et que la paroi de chaque corps tubulaire (7) et le bord de chaque orifice (6) sont joints à l'aide d'au moins une soudure (8).

10. Procédé pour fabriquer des anneaux de support réfrigérés selon la revendication 9, **caractérisé par le fait que** la quantité de poudre métallique utilisée pour la deuxième soudure (4b) est inférieure à celle qui est utilisée pour la première soudure (4a), que la quantité de poudre métallique utilisée pour la troisième soudure (4c) est inférieure à celle qui est utilisée pour la deuxième soudure (4b), et que la quantité de poudre métallique utilisée pour la quatrième soudure (4d) est égale ou presque égale à celle qui est utilisée pour la deuxième soudure (4b).

11. Procédé pour fabriquer des anneaux de support réfrigérés selon la revendication 7, **caractérisé par le fait que** la puissance du laser est supérieure/égale à 900 W ou inférieure/égale à 1800 W, et que la vitesse d'avance est égale/supérieure à 20 mm/s ou inférieure/égale à 100 mm/s.
